# EUROPÄISCHE PATENTSCHRIFT

(11) **EP 3 550 004 B1**
(45) Veröffentlichungstag und Bekanntmachung des Hinweises auf die Patenterteilung: **09.09.2020**
(21) Anmeldenummer: 18165402.1
(22) Anmeldetag: 03.04.2018
(51) Int. Cl.: C11B 1/06, A23J 1/14, A23L 7/139, A23P 30/20, A23P 30/30, B30B 9/06

(54) **VERFAHREN UND VORRICHTUNG ZUR INDUSTRIELLEN VERARBEITUNG VON RAPSSAAT UNTER GEWINNUNG VON KALTGEPRESSTEM RAPS-KERNÖL**
METHOD AND DEVICE FOR THE INDUSTRIAL PROCESSING OF RAPE SEED WITH RECOVERY OF COLD PRESSED RAPE SEED CORE OIL
PROCÉDÉ ET DISPOSITIF DE TRAITEMENT DE GRAINES DE COLZA INDUSTRIEL PERMETTANT D'OBTENIR L'HUILE DE NOYAU DE COLZA PRESSÉE À FROID

(43) Veröffentlichungstag der Anmeldung: 09.10.2019
(73) Patentinhaber: Euro-Protein GmbH, 37077 Göttingen (DE)
(72) Erfinder: Neumüller, Waldemar, Dr., 37133 Friedland-Ballenhausen (DE)
(74) Vertreter: REHBERG HÜPPE + PARTNER

(56) Entgegenhaltungen:
- EP-A1- 1 074 605
- DE-A1- 4 035 349
- DE-A1- 19 858 015
- DE-C1- 3 529 229
- WAN ET AL: "Technology and Solvents for Extracting Oilseeds and Nonpetroleum Oils", 1. Januar 1997 (1997-01-01), TECHNOLOGY AND SOLVENTS FOR EXTRACTING OILSEEDS FROM NONPETROLEUM OILS, CHAMPAIGN, AOCS PRESS, US, PAGE(S) 101 - 120, XP002124895, ISBN: 978-0-935315-81-3 * das ganze Dokument *
- HUI Y H ED - HUI YIU H: "Bailey's Industrial Oil and Fat Products. Vol. 2: Edible Oil and Fat Products: Oils and Oilseeds", 1. Januar 1996 (1996-01-01), EDIBLE OIL AND FAT PRODUCTS : OILS AND OILSEEDS, WILEY, NEW YORK, NY [U.A.], PAGE(S) 14 - 17, XP002108250, ISBN: 978-0-471-59426-0 * das ganze Dokument *

## Beschreibung

### TECHNISCHES GEBIET DER ERFINDUNG

Die Erfindung bezieht sich auf ein Verfahren zur Verarbeitung von Körnern einer Rapssaat mit den Schritten Schälen der Körner und Abtrennen einer schalenarmen Kornfraktion von einer schalenreichen Kornfraktion sowie Abpressen von kaltgepresstem Raps-Kernöl von der schalenarmen Kornfraktion bei Temperaturen unter 65 °C, wobei ein Presskuchen erhalten wird. Weiterhin bezieht sich die vorliegende Erfindung auf eine Vorrichtung zur Durchführung eines solchen Verfahrens mit einen Walzenspalt bildenden Schälwalzen zum Schälen der Körner, mit einer dem Walzenspalt nachgeschalteten und mindestens ein Sieb oder einen Windsichter zum Abtrennen einer schalenarmen Kornfraktion von einer schalenreichen Kornfraktion umfassenden Abtrenneinrichtung; mit Flockierwalzen zum Walzen der schalenarmen Kornfraktion zu Flocken und mit einer Schneckenpresse zum Abpressen von kaltgepresstem Raps-Kernöl von den Flocken, wobei die Schneckenpresse einen Presskuchen ausgibt.

Raps (Brassica napus), einschließlich so genannter Null-, Doppelnull- und Plusnull-Rapssorten und Canola, ist nach der Sojabohne die kommerziell bedeutendste Ölsaat weltweit und stellt einen wertvollen Rohstoff für die Nahrungsmittelindustrie, die Futtermittelindustrie, die Biodieselproduktion und die Oleochemie dar. Im Gegensatz zur Sojabohne, die primär als Lieferant von pflanzlichem Eiweiß dient, wird Raps primär zur Ölgewinnung angebaut. Hauptsächlich wird Rapsöl zu Biodiesel und Speiseölen verarbeitet. Bei der Gewinnung von Rapsöl aus Rapssaat bleibt ein Rückstand zurück, der beim reinen Abpressen des Rapsöls als Rapskuchen und nach ggf. zusätzlicher Lösungsmittelextraktionen als Rapsschrot bezeichnet wird. Auch das nach zusätzlicher Lösungsmittelextraktion zurückbleibende Rapsschrot macht etwa 60 % des Ausgangsmaterials aus. Es fällt daher in großen Mengen an. Bei seiner Verwendung als Tierfutter ist anders als bei Sojaschrot kein Einsatz als Alleinfutter möglich. Toxine, antinutritive Inhaltsstoffe und der hohe Schalenanteil stehen einer Verwendung als Alleinfutter ebenso entgegen wie einer Verwendung in der Lebensmittelindustrie, obwohl das enthaltene Rapsprotein grundsätzlich eine Aminosäurezusammensetzung aufweist, die für die Verwendung in der Ernährung von Menschen und Tieren günstig ist. Entsprechend ist der Marktpreis für Rapsschrot deutlich geringer als derjenige von Sojaschrot. Zugleich besteht eine hohe Nachfrage nach für Ernährungszwecke geeigneten Proteinen, insbesondere aus nicht genveränderten Quellen. Ein großer Bedarf an solchen Proteinen besteht beispielsweise bei der Fischzucht in Aquakulturen.

Um das in den Rückständen der Ölgewinnung aus Rapssaat enthaltene Rapsprotein zumindest als Futtermittel großtechnisch nutzbar zu machen, ist es erforderlich, die Toxine und andere störende Begleitstoffe zu reduzieren bzw. zu entfernen. Zudem sollte der Eiweißgehalt vorzugsweise auf das Maß von Sojaschrot und hieraus hergestelltem Sojaprotein-Konzentrat angehoben werden.

### STAND DER TECHNIK

Die Gewinnung von Öl aus Rapssaat erfolgt großtechnisch auf mechanischem und/oder chemischem Wege. Bei der mechanischen Gewinnung wird das Öl von den Körnern der Rapssaat abgepresst. Wenn beim Abpressen Temperaturen unter 65 °C eingehalten werden, fällt sogenanntes kaltgepresstes Raps-Kernöl an. Bei diesen Temperaturen kann durch das Abpressen der Restölgehalt eines aus der Rapssaat entstehenden Presskuchens auf etwa 20 Gewichtsprozent der Trockenmasse reduziert werden. Durch Abpressen auch bei höheren Temperaturen, wobei jedoch kein kaltgepresstes Raps-Kernöl mehr anfällt, kann der Restölgehalt weiter abgesenkt werden. Wenn die Körner der Rapssaat vor dem Abpressen geschält werden, um einen schalenfreien Presskuchen zu erhalten, liegt der Restölgehalt des Presskuchens, wenn nur kalt abgepresst wird, signifikant über 20 Gewichtsprozent. Durch anschließendes Extrahieren des Presskuchens mit Hexan, das typischerweise nach einem Zerkleinern des Presskuchens erfolgt, wird der Restölgehalt bis auf unter 1 Gewichtsprozent reduziert.

Nach dem Extrahieren bleibt das schon angesprochene Rapsschrot zurück, das auch dann, wenn die Körner der Rapssaat vor dem Abpressen des Raps-Kernöls geschält wurden, nur eine begrenzte Wertigkeit aufweist.

Aus der DE 40 41 994 A1 sind ein Verfahren und eine Anordnung zur Rapsschälung bekannt, bei denen eine kombinierte Druck- und Schlagprallbehandlung der Körner der Rapssaat erfolgt, um den Schalenanteil auf weniger als 5 % abzusenken. Bei dem bekannten Verfahren werden nach der Reinigung der Körner folgende Schritte durchgeführt: Klassierung der Körner und Abtrennung von Mindergrößen, Reduzieren der Feuchtigkeit der Körner durch Trocknung, Druckbehandlung durch Walzung mit einem Walzenspalt, der das 0,2- bis 0,4-fache des mittleren Saatgutdurchmessers beträgt, Schlagpralllösen der aufgebrochenen Schalen von den Kernen der Körner durch pneumatische Förderung, Windsichtung sowie Sichtung und Trennung der Schalen von den Kernen durch Elektroseparation. Hierfür werden bei der bekannten Anordnung ein Saatbunker, eine Waage, ein Eisenausscheider, ein Klassierdeck, ein Trockner, ein Walzenschäler, ein Zyklon, ein Windsichter und ein Elektroabscheider in Reihe geschaltet. An die Rapsschälung kann sich eine Gewinnung von Raps-Kernöl aus den Kernen anschließen.

Aus der EP 1 074 605 A1 sind ein Verfahren und eine Einrichtung zur Herstellung von Speiseöl aus Rapssaat bekannt. Dabei wird die Rapssaat durch Klassieren in Fraktionen verschiedener Partikelgrößen getrennt. Die gereinigte und klassierte Rapssaat wird getrocknet. Die getrocknete Rapssaat wird gebrochen. Die gebrochene Rapssaat wird in Fraktionen verschiedener Partikelgrößen getrennt, von denen eine Nutzbruch genannte Fraktion in Schälraps und Schalen zerlegt wird. Der Schälraps wird befeuchtet und anschließend flockiert. Danach wird der Schälraps in einer Presse kalt verpresst, um kaltgepresstes Raps-Kernöl zu gewinnen. Der dabei anfallende Presskuchen kann ebenso wie die anderen Nebenprodukte des bekannten Verfahrens als Futtermittel verwendet werden. Alternativ wird eine energetische Nutzung der abgetrennten Nebenprodukte, insbesondere der Schalenfraktionen, vorgeschlagen.

Die WO 2011/029611 A2 beschreibt ein Verfahren zur Bearbeitung von Körnern von Rapssaat, wobei diese geschält und in Kernanteile einerseits und Schalenanteile andererseits getrennt werden und wobei die Kernanteile zur Ölgewinnung einer oder mehreren Pressungen unterzogen werden. Das Verfahren wird so durchgeführt, dass ein bei der Ölgewinnung verbleibender feststoff- und ölhaltiger Presskuchen direkt oder nach einem weiteren Mahlschritt als Grund-, Füll- oder Zugabestoff für Humanlebensmittel ausgegeben wird. Bei der Ausgabe eines Grundstoffs für Humanlebensmittel kann der schalenfreie Presskuchen vermahlen werden, das Mahlgut durch Extraktion entölt werden und danach als Basis für eine Proteinkonzentration und/oder Proteinisolation dienen.

Aus der WO 2011/161665 A1 ist ein Verfahren zur Herstellung von Sojaproteinkonzentrat aus weißen Sojabohnenflocken bekannt. Die Sojabohnenflocken werden mit Hexan in einem kontinuierlich arbeitenden Hexanextraktor zur Entfernung von Öl extrahiert. Die Flocken werden nach dem partiellen Strippen des Hexans in einen wässrigen Alkoholextraktor überführt, um das Resthexan, Zucker und anderes alkohollösliches Material zu extrahieren.

Aus der US 4,158,656 A ist ein Verfahren zum Herstellen eines entgifteten Proteinkonzentratprodukts aus entfetteter Ölsaat, insbesondere Rapssaat, bekannt. Dabei werden die geschälten und entfetteten Körner der Rapssaat mit einem wässrigen Alkohollösungsmittel unter nicht oxidierenden Bedingungen extrahiert, und der Feststoffrückstand der Extraktion wird bei Temperaturen unter 60 °C getrocknet.

Aus der EP 1 228 701 A1 ist ein Verfahren zur Gewinnung von nativen, organischen Stoffen, insbesondere Ölen, Fetten, Wachsen, Farbstoffen, Vitaminen und/oder anderen lipophilen Stoffen und deren Derivaten aus nativen Stoffmengen mithilfe der Zentrifugalkraft bekannt. Dazu wird ein Ausgangsprodukt zerkleinert, aus dem zerkleinerten Ausgangsprodukt werden die lipophilen Stoffe mithilfe eines Extraktionsmittels extrahiert, und der Brei wird in einem Zentrifugalfeld in eine wässrige, feste Bestandteile enthaltene Phase und eine flüssige, organische Phase aufgetrennt, welche die hydrophoben Stoffe enthält.

Aus der WO 2010/096943 A2 ist ein Verfahren zur Herstellung eines Proteinpräparats aus Rapssaaten bekannt, das ein Schälen der Körner der Rapssaat, eine mechanische Entölung, in welcher nur ein Teil des Öls abgetrennt wird und welche bei einer über die Zeitdauer des Pressvorgangs gemittelten Temperatur von unter 80 °C durchgeführt wird, und eine Extraktion umfasst. In der mechanischen Entölung, die bei einer über die Zeitdauer des Pressvorgangs gemittelten Temperatur von unter 80 °C durchgeführt wird, wird nur ein Teil des Öls abgetrennt. In der Extraktion werden Proteinfremdstoffe aus dem Proteinmehl abgereichert. Der Extraktion ist eine Aufbereitung in der Korngröße nachgeschaltet, um ein Schüttgut mit einer vorgegebenen Korngrößenverteilung zu erhalten. Konkret beginnt das bekannte Verfahren mit einer Schälung der Körner der Rapssaat durch Aufschluss in einer Schlagmühle und Auftrennung in eine kernreiche Grobfraktion und eine schalenreiche Feinfraktion im Luftstrom in einen Zick-Zack-Sichter. Die Kernfraktion wird dann in einer Schneckenpresse bei Temperaturen zwischen 30 und 45 °C auf einen Restölgehalt von ca. 23 Gewichtsprozent kalt abgepresst, wobei der Presskuchen in Form von zusammengepressten Strängen, Presskuchen-Pellets genannt, erhalten wird. Die Presskuchen-Pellets werden mit Hexan in einer Soxhlet-Apparatur auf einen Restölgehalt unter 3 % entölt. Dann wird das Lösemittel im Luftstrom bei Raumtemperatur entfernt. Die so erhaltenen extrahierten Proteinmehl-Pellets werden ohne weitere Zerkleinerung mit einer Ethanol-Lösung im Perkolationsverfahren behandelt. Das dadurch anfallende fertige Proteinkonzentrat wird mit oder ohne nachfolgenden Zerkleinerungen verwendet.

Aus der DE 40 35 349 A1 sind ein Verfahren und eine Anordnung zur Gewinnung von Öl aus Leguminosensamen bekannt, bei der Körner beispielsweise von Rapssaat durch eine Plättchenherstellung aufbereitet werden, auf die ein Anfeuchten dieser Plättchen mit daran anschließender Expandierung und Trocknung sowie ein Abpressen bei Temperaturen <100 °C auf ein Restölgehalt von 15 bis 25 % folgen. Ein beim Abpressen entstehender Presskuchen wird bei Temperaturen von ca. 65 °C extrahiert.

Aus der DE 35 29 229 C1 sind ein Verfahren und eine Vorrichtung zur thermischen Konditionierung von Ölsaaten und Ölfrüchten, insbesondere Leguminosesamen, für die Gewinnung von Ölen und Fetten einerseits und einem als Kraftfutter geeigneten öl- bzw. fettfreien Schrot andererseits bekannt. Dabei werden die gereinigten, getrockneten und zerkleinerten Ölsaaten und Ölfrüchte im Anschluss an eine vorausgegangene Glattwalzung kurzzeitig auf Temperaturen über 100 °C bei überatmosphärischem Druck in einer luft- bzw. sauerstofffreien Atmosphäre erhitzt und anschließend bei gleichzeitiger Abkühlung auf Temperaturen unterhalb 100 °C schlagartig entspannt. Dadurch wird erreicht, dass die Ureaseaktivität im Schrot weitgehend inhibiert ist und die Proteine insgesamt sowie deren Wasserlöslichkeit in erheblichem Maße erhalten bleiben. Die bekannte thermische Konditionierung kann im Anschluss an eine Pressung und vor einer Extraktion erfolgen, bei der eine Extraktionstemperatur von 50 bis 65 °C eingestellt wird. Für Rapssaat wird konkret vorgeschlagen, die glattgewalzten Körner zunächst unter relativ milden Bedingungen thermisch zu konditionieren, dann das warme Material unter Gewinnung von Raps-Kernöl abzupressen und den Presskuchen bei gesteigerten Bedingungen erneut thermisch zu konditionieren, abzukühlen sowie schließlich in bekannter Weise zu extrahieren. Hierdurch soll es gelingen, den Ölgehalt der Schalen optimal zu gewinnen und eine klare Trennung von gepresstem Raps-Kernöl aus den Kernen und extrahiertem Öl aus den Schalen zu erreichen.

### AUFGABE DER ERFINDUNG

Der Erfindung liegt die Aufgabe zugrunde, ein Verfahren und eine Vorrichtung aufzuzeigen, mit denen aus Rapssaat neben einem hochwertigen kaltgepressten Raps-Kernöl ein proteinhaltiges Produkt erhalten wird, das zu hochwertigem Futter- und Nahrungsmitteln weiterverarbeitet werden kann, wobei eine großtechnische Umsetzbarkeit des Verfahrens und der Vorrichtung sichergestellt ist.

### LÖSUNG

Die Aufgabe der Erfindung wird durch ein Verfahren mit den Merkmalen des unabhängigen Patentanspruchs 1 und durch eine Vorrichtung mit den Merkmalen des Patentanspruchs 11 gelöst. Bevorzugte Ausführungsformen des erfindungsgemäßen Verfahrens und der erfindungsgemäßen Vorrichtung sind in den abhängigen Patentansprüchen definiert.

### BESCHREIBUNG DER ERFINDUNG

Bei einem erfindungsgemäßen Verfahren zur Verarbeitung von Körnern einer Rapssaat mit den Schritten Schälen der Körner und Abtrennen einer schalenarmen Kornfraktion von einer schalenreichen Kornfraktion sowie Abpressen von kaltgepresstem Öl von der schalenarmen Kornfraktion bei Temperaturen unter 65 °C, wobei ein Presskuchen erhalten wird, wird dem durch das Abpressen erhaltenen Presskuchen gespannter Wasserdampf zugeführt und wird der Presskuchen wird anschließend zu Collets expandiert, wobei der Presskuchen unter Einwirkung des Wasserdampfs vorübergehend auf über 100 °C erwärmt wird.

Bei dem erfindungsgemäßen Verfahren werden die Körner der Rapssaat vor dem Abpressen des kaltgepressten Raps-Kernöls geschält. Entsprechend weist der durch das Abpressen erhaltene Presskuchen und weisen auch die durch das Expandieren des Presskuchens erhaltenen Collets keine oder zumindest wenige Schalen auf. Hieraus resultiert neben einer gewissen Qualitätssteigerung bei dem kaltgepressten Raps-Kernöl insbesondere eine erhebliche Steigerung der Wertigkeit der Collets. Diese Collets sind als solche bereits als Tierfutter verwendbar. Sie sind durch das Erwärmen des Presskuchens hygienisch unbedenklich und weisen dennoch durch die Kurzzeitigkeit dieses Erwärmens eine günstige Aminosäurezusammensetzung mit allenfalls geringen unerwünschten Denaturierungen auf. Insbesondere weisen die Collets eine für ihre weitere Aufbereitung, wie sie im Folgenden erläutert werden wird, günstige zusammenhängende, aber offene Struktur auf.

Das erfindungsgemäße Verfahren kann, falls erforderlich, mit einer Reinigung der Körner der Rapssaat beginnen, um Verunreinigungen wie Steine oder Spreu zu entfernen. Die so gereinigten Körner können einer Klassierung nach Korngrößen unterworfen werden, um Körner abzutrennen, die für das anschließende Schälen der Körner nicht gut geeignet sind. Konkret können Körner kleiner als eine Mindestgröße zwischen 1,4 mm und 1,8 mm, vorzugsweise von etwa 1,6 mm, und größer als eine Maximalgröße zwischen 2,6 und 3,0 mm, vorzugsweise von etwa 2,8 mm, abgetrennt werden. Dabei können die die Maximalgröße überschreitenden Körner mit einer auf ihre Korngröße abgestimmten Vorrichtung getrennt geschält, und die Körner mit einer Korngröße unterhalb der Mindestgröße anderweitig verwendet werden. Typischerweise liegt der Anteil kleiner Körner unter 8 Gewichtsprozent, oftmals unter 4 Gewichtsprozent.

Bereits zuvor oder anschließend werden die Körner für das Schälen auf einen Feuchtigkeitsgehalt zwischen 3 und 7 Gewichtsprozent, vorzugsweise von etwa 5 Gewichtsprozent, eingestellt und dazu bedarfsweise getrocknet. Die Trocknungstemperatur sollte ggf. so gewählt werden, dass eine Korntemperatur von 70 °C, vorzugsweise von 60 °C, nicht überschritten wird. Zum Schälen werden die Körner bspw. durch einen Walzenspalt zwischen Schälwalzen hindurchgeführt, der typischerweise mindestens 20 % kleiner als die Mindestgröße der Körner ist. Die Körner können auch nacheinander mehrere Walzenspalte mit abnehmenden Größen durchlaufen.

Anschließend werden die zwischen den Schälwalzen gebrochenen Körner durch Sieben und/oder Windsichten, wozu auch eine Aspiration der Schalen zählt, in die schalenarme Kornfraktion und die schalenreiche Kornfraktion getrennt. Die dabei in der schalenarmen Kornfraktion verbleibenden Schalen machen nicht mehr als 4 Gewichtsprozent aus. Vorzugsweise betragen sie nicht mehr als 3,5 Gewichtsprozent. In der schalenreichen Kornfraktion finden sich hingegen Kerne, die bis zu 40 Gewichtsprozent der schalenreichen Kornfraktion ausmachen können. Daher wird die schalenreiche Kornfraktion sinnvoller Weise zur Gewinnung einer weiteren schalenarmen Kornfraktion aufbereitet. Dies geschieht vorzugsweise durch Versetzen der schalenreichen Kornfraktion mit Wasser von etwa 20 bis 30 °C, d. h. etwa Raumtemperatur oder 25 °C, das eine Quellung der in den Kernen enthaltenen Fasern auslöst. Diese Quellung tritt aufgrund einer anderen Morphologie bei den in den Schalen enthaltenen Fasern nicht oder zumindest nicht in demselben Maße auf. Zudem unterscheiden sich die Kerne von den Schalen durch einen höheren Ölgehalt. Nach der Quellung der Fasern in den Kernen, weisen die Kerne eine geringere Dichte als Wasser auf, während die Schalen weiterhin eine höhere Dichte als Wasser haben. Entsprechend tritt eine Flotation der Kerne auf, wobei die Flotation und die damit einhergehende Trennung von Kernen und Schalen durch Einleitung feiner Gasblasen und/oder leichtes, scherungsarmes Rühren unterstützt werden kann. Die flotierten Kerne werden als die weitere schalenarme Kornfraktion abgenommen. Sie können über eine Bandpresse entwässert und der schon zuvor abgetrennten schalenarmen Kornfraktion zugeschlagen werden. Dieses Zuschlagen kann bereits vor dem Abpressen des kaltgepressten Raps-Kernöls erfolgen, aber auch erst später. Vorzugsweise erfolgt das Einbringen der weiteren schalenarmen Kornfraktion in den Materialhauptstrom aber vor dem vor dem Zuführen des gespannten Wasserdampfs und dem sich daran anschließenden Expandieren zu den Collets. Die abgetrennte Schalenfraktion kann aufgrund ihrer größeren Dichte als Wasser separiert, weiter aufgereinigt und dann beispielsweise thermisch oder in einer Biogasanlage verwertet werden.

Nach dem Schälen wird die Feuchtigkeit der schalenarmen Kornfraktion auf 5 bis 9 Gewichtsprozent und vorzugsweise etwa 7 Gewichtsprozent ihrer Trockenmasse angehoben. Diese leicht erhöhte Feuchtigkeit ist vorteilhaft beim anschließenden Abpressen des kaltgepressten Öls. Sie ist aber auch günstig, wenn die schalenarme Kornfraktion noch vor dem Abpressen zu Flocken gewalzt wird. Die Einstellung der Feuchtigkeit der schalenarmen Kornfraktion kann auch dadurch erfolgen, dass zumindest ein Teil der weiteren schalenarmen Kornfraktion von der Flotation und mit entsprechend erhöhter Feuchtigkeit bereits vor dem Abpressen bzw. dem Walzen der schalenarmen Kornfraktion zu Flocken zugeschlagen wird. Die Flocken weisen vorzugsweise eine Flockendicke von 0,1 bis 0,5 mm auf. Entsprechend wird die schalenarme Kornfraktion durch mindestens einen von Flockierwalzen gebildeten Walzenspalt hindurchgeführt.

Beim Abpressen kann das kaltgepresste Raps-Kernöl in einer ersten Ölfraktion, die während des Abpressens auf nicht mehr als eine Grenztemperatur erwärmt wird, und in einer zweiten Ölfraktion, die während des Abpressens auf mehr als die Grenztemperatur erwärmt wird, aufgefangen werden. Die erste Ölfraktion weist dann den geringsten thermischen Einfluss auf ihre Ölzusammensetzung auf, und es handelt sich um das hochwertigste bei dem erfindungsgemäßen Verfahren gewonnene Raps-Kernöl. Auch die zweite Ölfraktion ist noch hochwertiges kaltgepresstes Raps-Kernöl. Es kann auch noch eine dritte Ölfraktion aufgefangen werden, die während des Abpressens auf mehr als eine weitere Grenztemperatur erwärmt wird. Die Grenztemperatur zwischen der ersten und zweiten Ölfraktion kann zwischen 40 und 50 °C oder etwa bei 45 °C liegen, die weitere Grenztemperatur bei etwa 60 °C. Bei dem erfindungsgemäßen Abpressen bei Temperaturen unter 65 °C kann die schalenarme Kornfraktion auf einen ersten Restölgehalt von 18 bis 28 Gewichtsprozent oder 20 bis 24 Gewichtsprozent, d. h. etwa 22 Gewichtsprozent ihrer Trockenmasse abgepresst werden. Das kaltgepresste Raps-Kernöl kann in üblicher Weise durch Filtration und/oder Sedimentation aufbereitet werden und liefert kaltgepresste native Rapskernöle in Lebensmittelqualität.

Der durch das Abpressen erhaltene Presskuchen wird zerkleinert und ihm wird die weitere schalenarme Kornfraktion bzw. was davon noch übrig ist, zugeschlagen. Dieses Material wird für das Zuführen des Wasserdampfs und das anschließende Expandieren einem Expander zugeführt. Durch die Zugabe des gespannten Wasserdampfs wird das Material komprimiert und dabei kurzzeitig auf typischerweise 130 bis 140 °C erwärmt, bevor es expandiert und dabei durch die Entspannung des Wasserdampfs wieder abgekühlt wird. Die entstehenden Expandate sind die erfindungsgemäß hergestellten Collets. Im Gegensatz zu Pellets, in denen der Presskuchen anfallen kann, weisen diese Collets eine offene Porenstruktur auf, die ihre weitere Verarbeitung erleichtert. Die durch Dampf und Druck erzeugte kurzzeitige Temperaturerhöhung auf über 100 °C und bis zu 140 °C inhibiert Enzyme und Salmonellen. Zudem führt sie zu einer partiellen Denaturierung der in den Collets enthaltenen Proteine. Diese partielle Denaturierung schränkt den Futter- bzw. Nahrungsmittelwert der Proteine nicht wesentlich ein. Die partielle Denaturierung der Proteine führt aber dazu, dass die Proteine bei anschließenden Extraktionen der Collets, um diesen weiteres Öl und unerwünschte Inhaltsstoffe zu entziehen, in den Collets zurückbleiben und nicht verlorengehen.

Die Collets werden mit Hexan extrahiert, um die Collets auf einen zweiten Restölgehalt von kleiner als 2 Gewichtsprozent oder von 0,3 bis 1,3 Gewichtsprozent ihrer Trockenmasse zu reduzieren. Grundsätzlich kann statt Hexan auch ein anderes organisches Lösungsmittel, in dem sich Öl gut löst, verwendet werden, wie beispielsweise Isopropanol. Für die Extraktionen können ebenso wie für alle bisher beschriebenen Schritte des erfindungsgemäßen Verfahrens industrielle Standardtechnologien eingesetzt werden, insbesondere Karussellextrakteure oder Bandextrakteure. Das eingesetzte Lösungsmittel umschließt in einer Perkolation die Collets, wobei aus dem Lösungsmittel eine Miscella entsteht, in der das in den Collets enthaltene Öl gelöst ist. Diese Miscella wird in bekannter Weise durch Destillationen von dem Lösungsmittel getrennt, so dass das Öl zurückbleibt. Bei diesem handelt es sich um Rapskern-Extraktionsöl. Die extrahierten Collets können getrocknet und zerkleinert werden, wobei ein hochproteinhaltiges Rapskernmehl mit einem Proteingehalt von mehr als 40 , vorzugsweise mehr als 42% Gewichtsprozent Protein entsteht. Dieses Rapskernmehl kann weiter aufbereitet werden. Alternativ können die mit Hexan extrahierten Collets direkt, also ohne Trocknen und/oder Zerkleinern weiter aufbereitet werden.

So können, um die Struktur der Hexan-nassen Collets nicht zu zerstören und damit Feinteilchen zu erzeugen, die Collets durch einfache Drainage und das Abtropfen des Hexans vor dem Austrag aus dem Hexan-Extrakteur entfeuchtet werden. Auf diese Weise können typischerweise mehr als 50 % des Hexans aus den Collets entfernt werden. Im Austrag des Hexan-Extrakteurs werden die Collets von einer Fördereinheit zerstörungsfrei aufgenommen und transportiert, beispielsweise von einer Förderschnecke oder einem Förderband. Die Fördereinheit fördert die Hexan-nassen Collets ohne Scherung zu einem Filter, der in Trennbereiche unterteilt ist. Zerstörungsfrei wird das Material auf den Filter übergeben. Bei dem Filter kann es sich um einen geschlossenen Drehfilter oder Bandfilter handeln, insbesondere einen Vakuumbandfilter. Zwischen der Fördereinheit und dem Filter kann eine Zellenradschleuse installiert sein, um eine Abgrenzung der Lösungsmittelbereiche zu erreichen. Nachdem die Hexan-nassen Collets auf dem Filter angeordnet wurden, wird der Filter in eine erste Position gebracht, in der der Hexan-Gehalt der Hexan-nassen Collets weiter reduziert wird. Dies kann durch Anlegen eines Vakuums an einen Vakuumbandfilter beschleunigt werden. So kann ein Hexan-Anteil von unter 40 Gewichtsprozent erreicht werden. Dabei hat sich das Hexan aufgrund der Kapillarwirkung zu dem Filter hin konzentriert, so dass über dem Hexan in den Kapillaren in den Collets eine Hexan-arme Schicht ausgebildet ist. Ab einer zweiten Position des Filters kann dann reiner Alkohol oder ein Wasser-Alkohol-Azeotrop aufgetragen werden, um das Hexan zu verdrängen. Durch die resultierende Schichtung der Lösungsmittel in den Collets ergibt sich eine nahezu ebene Alkohol/Hexan-Grenzschicht, so dass das Hexan im Wesentlichen getrennt von dem Alkohol aufgefangen werden kann.

Mit einem Bandfilter kann das Lösungsmittel auch mit geringen Mengen des Alkohols ausgetauscht werden. Nach zwei bis drei Waschstufen ist das Hexan in der Struktur der Collets rückstandslos gegen Alkohol ausgetauscht. Dabei ergeben sich nur kleine Volumina einer Hexan/Alkohol-Mischfraktion, die separat durch Destillation aufbereitet werden können.

An den Lösungsmittelaustausch oder an eine Trocknung der mit Hexan extrahierten Collets kann sich eine Extraktion der Collets mit einer wässrigen Alkohollösung anschließen, um ein gereinigtes Rapsproteinkonzentrat zu erhalten. Dabei kann die wässrige Alkohollösung 70 bis 96 Volumenprozent Alkohol aufweisen. Bevorzugt sind 80 bis 90 Volumenprozent Alkohol. Diese Alkoholextraktion insbesondere mit Ethanol dient der Entfernung von Toxinen und anderen antinutritiven Inhaltsstoffen. Bei der bevorzugten Alkoholkonzentration bleibt die Quellung der in dem Rapsmaterial enthaltenen Fasern und die damit einhergehende Volumenzunahme gering. So wird auch verhindert, dass die Perkolationsraten der Collets in Folge der Quellung stark absinken. Vorzugsweise werden die Collets mit der wässrigen Alkohollösung im Gegenstrom extrahiert. Dabei ist ein Verhältnis Feststoff zu Lösungsmittel von 1 zu 2 bis 1 zu 4 sinnvoll. Vorzugsweise werden mindestens 10 Extraktionsstufen im Gegenstrom durchlaufen. Gegen Ende der Extraktion kann eine Verdrängungswäsche mit mindestens 90-, vorzugsweise 96-prozentigem Alkohol erfolgen, um die Trocknung des extrahierten Materials zu erleichtern. Die Extrakte von den Extraktionsstufen werden gesammelt. Nach Abdestillieren des Alkohols verbleibt eine Raps-Melasse.

Das gereinigte Rapsproteinkonzentrat kann insbesondere nach dem Verdrängen der wässrigen Alkohollösung mit dem mindestens 95-prozentigem Alkohol beispielsweise durch Toasten, Flash-Trocknen oder Vakuum-Trocknen getrocknet werden. Das getrocknete Rapsproteinkonzentrat weist einen Proteinanteil von über 60 Gewichtsprozent bezogen auf seine Trockensubstanz auf.

Bei einer erfindungsgemäßen Vorrichtung zur Durchführung des erfindungsgemäßen Verfahrens zur Verarbeitung von Körnern einer Rapssaat mit einen Walzenspalt bildenden Schälwalzen zum Schälen der Körner, mit einer dem Walzenspalt nachgeschalteten und mindestens ein Sieb oder einen Windsichter zum Abtrennen einer schalenarmen Kornfraktion von einer schalenreichen Kornfraktion umfassenden Abtrenneinrichtung, mit Flockierwalzen zum Walzen der schalenarmen Kornfraktion zu Flocken und mit einer Schneckenpresse zum Abpressen von kaltgepresstem Raps-Kernöl von den Flocken, wobei die Schneckenpresse einen Presskuchen ausgibt, ist ein der Schneckenpresse nachgeschalteter Expander zum Expandieren des Presskuchens zu Collets vorhanden, indem dem Presskuchen gespannter Wasserdampf zugeführt wird. Weiterhin kann ein Flotationsbecken vorhanden sein, um die schalenreiche Kornfraktion durch Flotation in Wasser in eine weitere schalenarme Kornfraktion und eine Schalenfraktion aufzutrennen. Dabei kann das Flotationsbecken optional einen an oder nahe seinem Grund einmündenden Druckluftanschluss und/oder ein Rührwerk aufweisen.

Ein dem Expander nachgeschalteter Extrakteur ist dazu vorgesehen, die Collets mit Hexan zu extrahieren, die noch Hexan-nassen Collets einem Lösungsmittelaustausch zu unterziehen und die Collets nach dem Lösungsmittelaustausch mit einer wässrigen Alkohollösung zu extrahieren.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Schneckenpresse die Rede ist, ist dies so zu verstehen, dass genau eine Schneckenpresse, zwei Schneckenpressen oder mehr Schneckenpressen vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.

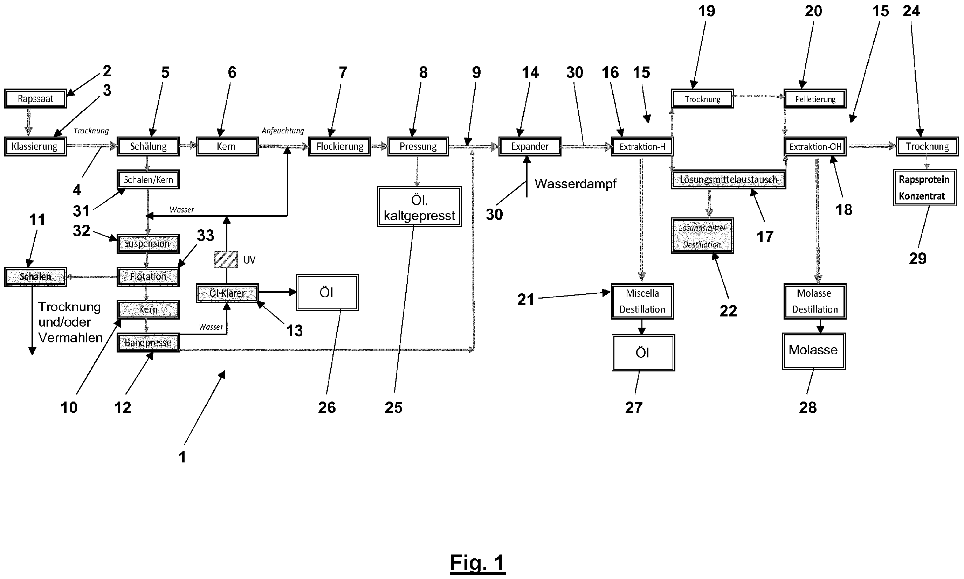

- **Fig. 1**: ist ein Blockdiagramm einer erfindungsgemäßen Vorrichtung und zum Ablauf des erfindungsgemäßen Verfahrens.

### FIGURENBESCHREIBUNG

**Fig. 1** zeigt in einem Blockdiagramm eine erfindungsgemäße Vorrichtung 1 und zugleich den Ablauf eines erfindungsgemäßen Verfahrens. Rapssaat wird aus einem Bunker 2 einer Klassierung und Reinigung in einer Siebanlage 3 unterworfen. Von der Siebanlage 3 werden gereinigte Körner 4 innerhalb eines vorgegebenen Korngrößenbereichs erhalten. Nach eventueller Trocknung, um eine Feuchtigkeit der Körner 4 von etwa 5 Gewichtsprozent einzustellen, erfolgt eine Schälung der Körner 4 mit einen Walzenspalt bildenden Schälwalzen 5, denen eine Abtrenneinrichtung nachgeschaltet ist. Ergebnis sind eine schalenarme Kornfraktion 6 und eine schalenreiche Kornfraktion 31. Die schalenarme Kornfraktion 6 wird nach Anfeuchtung, um eine Feuchtigkeit von etwa 7 Gewichtsprozent ihrer Trockenmasse einzustellen, mit Flockierwalzen 7 zu Flocken gewalzt. Von den Flocken wird in einer Schneckenpresse 8 kaltgepresstes Raps-Kernöl 25 abgepresst. Ein resultierender Presskuchen 9 wird einem Expander 14 zugeführt.

Die schalenreiche Kornfraktion 31 wird hingegen mit Wasser zu einer Suspension 32 versetzt, in der die in einem Kernanteil der schalenreichen Kornfraktion 31 enthaltenen Fasern quellen. Danach tritt eine Flotation 33 auf, bei der eine weitere schalenarme Kornfraktion 10 aufschwimmt und sich so von einer Schalenfraktion 11 trennt. Die Schalenfraktion 11 kann getrocknet und/oder vermahlen werden und beispielsweise in einer Verbrennungs- oder Biogasanlage verwertet werden. Die weitere schalenarme Kornfraktion 10 wird in einer Bandpresse 12 abgepresst. Ihr Feststoffanteil wird dem Presskuchen 9 vor dem Expander 14 zugeschlagen. Von der Bandpresse 12 abgepresstes Wasser wird in einem Ölklärer 13 aufbereitet, in dem Öl 26 abgetrennt wird. Das gereinigte Wasser wird UV-behandelt und wieder verwendet. Der Presskuchen 9 und die weitere schalenarme Kornfraktion 10 werden zerkleinert und einem Expander 14 zugeführt. In dem Expander 14 wird die Temperatur des Presskuchens 9 durch Zuführung von gespanntem Wasserdampf kurzzeitig auf über 100 °C, typischerweise 130 bis 140 °C erhöht. Beim Austreten aus dem Expander entspannt sich der Wasserdampf und kühlt das in Form von Collets 30 austretende Material ab. Die Collets 30 werden in einem Extrakteur 15 zunächst einer Hexanextraktion 16 unterzogen. Nach Lösungsmittelaustausch 17 erfolgt dann eine Alkoholextraktion 18. Statt des Lösungsmittelaustauschs kann auch eine Trocknung 19 der Hexan-extrahierten Collets erfolgen. Hieran kann sich eine Pelletierung 20 oder eine weitere Expansion des getrockneten Materials anschließen. Die Alkoholextraktion 18 kann aber auch an einem von der Trocknung 19 resultierenden Mehl durchgeführt werden. In einer Destillation 21 wird aus der Miscella der Hexanextraktion 16 Extraktionsöl 27 gewonnen. In einer Destillation 22 wird Lösungsmittel von dem Lösungsmittelaustausch 17 zurückgewonnen. Aus einer Destillation 23 des alkoholischen Extrakts von der Alkoholextraktion 18 resultiert eine Molasse 28. Eine Trocknung 24 des Rückstands der alkoholischen Extraktion 18 ergibt ein gereinigtes Rapsproteinkonzentrat 29.

### BEISPIEL

10 Tonnen Raps, beispielsweise Doppelnull-Raps, werden gereinigt. Je nach Verunreinigungsgrad werden 2 bis 3 % der Ausgangsmasse entfernt. Bei einer nachfolgenden Klassierung werden bis zu 4 % Körner mit einer Korngröße unter 1,6 mm und über 2,8 mm entfernt. 94 % der ursprünglichen Rapssaat mit einem Feuchtigkeitsgehalt zwischen 7 und 9 % werden der Trocknung zugeführt.

Bei 60 bis 70 °C wird die Rapssaat auf eine Feuchtigkeit von 5 Gewichtsprozent getrocknet und nach Abkühlung auf 30 °C den Schälwalzen 5 zugeführt. Die Auftrennung in die schalenreiche Kornfraktion 31 und die schalenarme Kornfraktion 6 ergibt etwa 75 bis 80 Gewichtsprozent schalenarme Kornfraktion und 20 bis 25 Gewichtsprozent schalenreiche Kornfraktion 31. Die schalenreiche Kornfraktion 31 weist dabei 30 bis 40 Gewichtsprozent Kernmaterial auf, während die schalenarme Kornfraktion 6 unter 4 % Schalen umfasst. Die schalenreiche Kornfraktion 31 enthält insgesamt ca. 17 Gewichtsprozent Öl und 14 Gewichtsprozent Protein. Die schalenreiche Kornfraktion 31 wird mit Wasser von 20 bis 30 °C versetzt. In Massenanteilen ergibt sich dabei ein Verhältnis von 1 zu 6, d. h. auf 1 Kg der schalenreiche Kornfraktion 31 entfallen mindestens 6 Kg Wasser. Nach Zugabe des Wassers wird die resultierende Suspension 32 durch leichtes, scherfreies Rühren in Bewegung gesetzt und durchmischt. Für 15 Minuten quellen die Fasern der Kerne in der schalenreichen Kornfraktion 31. In der anschließenden Flotation 33 der gerührten schalenreichen Kornfraktion kommt es zu einer Auftrennung in die aufschwimmende weitere schalenarme Kornfraktion 10 und die Schalenfraktion 11. Zur Verstärkung der Flotation kann fein verteilte Luft eingeblasen werden. Die gequollenen Kerne der weiteren schalenarmen Kornfraktion 10 werden mit der Bandpresse 12 aufgefangen. Das Wasser wird abgetrennt und im Kreislauf einer neuen schalenreichen Kornfraktion 31 zugeführt. Die mit der Bandpresse 12 aufgefangene weitere schalenarme Kornfraktion 10 wird entwässert und dem Presskuchen 9 vor dem Expander 14 zugesetzt.

Die schalenarme Kornfraktion 6 wird auf eine Feuchtigkeit von 6 bis 7 % eingestellt und anschließend mit den Flockierwalzen 7 zu Flocken mit einer Dicke von 0,2 bis 0,4 mm gewalzt. Die Flocken werden durch Kühlung auf einer Temperatur zwischen 35 und 40 °C gehalten. Die Flocken werden direkt der Schneckenpresse 8 zugeführt. In der Schneckenpresse 8 werden die Flocken durch die Schnecke der Schneckenpresse komprimiert. Das austretende kaltgepresste Raps-Kernöl 25 wird nach Temperaturbereichen getrennt aufgefangen. Das erste Öl mit einer Temperatur von 35 bis 45 °C ist natives, kaltgepresstes virgin Raps-Kernöl. Die Ölfraktion zwischen 45 und 60 °C ist natives, kaltgepresstes Raps-Kernöl. Beide Ölfraktionen ergeben zusammen ca. 2,8 Tonnen kaltgepresstes Raps-Kernöl 25, wobei 40 % virgin Raps-Kernöl und 60 % natives kaltgepresstes Raps-Kernöl sind. Der aus der Schneckenpresse 8 austretende Presskuchen 9 weist einen Restölgehalt von 22 bis 23 Gewichtsprozent auf.

Dem Presskuchen 9 wird die weitere schalenarme Kornfraktion 10 von der Bandpresse 12 zugesetzt, zerkleinert und dem Expander 14 zugeführt. In dem Expander 14 wird unter Zugabe von gespanntem Wasserdampf 30 der Presskuchen so erwärmt, dass bei Austritt aus dem Expander 14 eine Temperatur zwischen 130 und 140 °C für 5 bis 10 Sekunden erreicht wird. Der Druck am Austritt des Expanders 14 liegt zwischen 30 und 40 Bar. Das entstehende Expandat sind die Collets 30. Die Collets 30 werden abgekühlt und in einem Karussellextrakteur des Extrakteurs 15 mit Hexan bei 60 °C mehrstufig im Gegenstrom unter Perkolation extrahiert. Die entstehende Miscella wird destilliert und das Hexan wird dem Prozess erneut zugeführt. Die Extraktionszeit liegt zwischen 0,5 und 2 Stunden, vorzugsweise bei ca. 1 Stunde. Es entsteht extrahiertes Rapskern-Extraktionsöl 27 mit einer Masse von 1,1 Tonnen.

Die Hexan-nassen ölextrahierten Collets 30 werden abgetropft und entfeuchtet. Die Collets 30 können dann entweder einer Trocknung zu einem hochproteinhaltigen Rapsproteinmehl oder einem Bandfilter zugeführt werden. Bei dem Bandfilter handelt es sich insbesondere um einen Vakuumbandfilter. Nach Weitertransport wird das enthaltene Hexan mit 96-prozentigem Ethanol überschichtet. Im weiteren Verlauf wird das Ethanol durch die Collets gesaugt, wobei im Gegenstrom das Ethanol zugeführt wird. Nach 3 Takten ist das Hexan durch Ethanol ausgetauscht, und die Collets werden nun mit 80-prozentigem Ethanol überschichtet und im Gegenstrom weiterbehandelt, wobei eine Quellzeit von 15 Minuten erreicht wird. Das Material wird nachfolgend einer weiteren Stufe des Extrakteurs 15 zugeführt, in der die Collets mit 80-prozentigem Ethanol weiter extrahiert werden, wobei die Extraktionszeit 1 bis 3 Stunden beträgt. Die letzte Alkoholstufe ist eine Verdrängung des Alkohol-Wassergemisches gegen 96-prozentiges Ethanol, um die Energiekosten der anschließenden Trocknung 24 zu reduzieren. Der Alkohol wird abdestilliert und wiederverwendet. Zurück bleibt die Molasse 28. Die Trockenmasse der Molasse 28 entspricht etwa 10 % der verarbeitenden Rapssaat. Das durch die Alkoholextraktion gereinigte Rapsproteinkonzentrat 29 wird getrocknet und ergibt 3 Tonnen.

Das Rapsproteinkonzentrat 29 weist folgende Zusammensetzung auf:
Das Rapsprotein-Konzentrat hat folgende Zusammensetzung:

| | |
|---|---|
| Proteingehalt auf Trockensubstanz (N*6,25) | 62,0% +/-2%, |
| Trockensubstanz | 90% +/-2% |
| Ölgehalt | 0,4% +/-0,2% |
| Glycosinolatgehalt | kleinergleich 1 µg/g |
| Polyphenole | kleinergleich 0,1% |
| Sinapine | kleinergleich 0,1% |
| Phytic acid | 3%+/-1% |
| Helle Farbe | |
| Neutraler Geschmack | |
| Ausbeute an Konzentrat auf klassierten Raps | 30% |

Die exemplarische Aminosäurezusammensetzung zeigt eine der Rapssaat nahekommende Zusammensetzung:

| **TYPICAL AMINO ACIDS** | | | |
|---|---|---|---|
| | on Sample g/100g DM | on Protein g/100g Protein | |
| Aspartic Acid Asp | 4,94 | 8,13 | *NE* |
| Glutamic Acid Glu | 11,16 | 18,36 | *NE* |
| Hydroxyprolin Hyp | 0,17 | 0,28 | *NE* |
| Serine Ser | 2,79 | 4,59 | *NE* |
| Glycine Gly | 3,55 | 5,84 | *NE* |
| Histidine His | 1,86 | 3,06 | *E* |
| Arginine Arg | 4,45 | 7,33 | (*NE*) |
| Threonine Thr | 2,99 | 4,92 | *E* |
| Alanine Ala | 2,80 | 4,60 | *NE* |
| Proline Pro | 3,68 | 6,06 | *NE* |
| Tyrosine Tyr | 1,60 | 2,63 | (*NE*) |
| Valine Val | 3,58 | 5,89 | *E BCAA* |
| Methionine Met | 1,18 | 1,94 | *E BCAA* |
| Isoleucine Ile | 2,73 | 4,49 | *E* |
| Leucine Leu | 4,73 | 7,78 | *E BCAA* |
| Phenylalanine Phe | 2,72 | 4,47 | *E* |
| Lysine Lys | 4,05 | 6,66 | *E* |
| Cysteine/Cyst Cys | 1,68 | 2,76 | (*NE*) |
| Tryptophan Trp | 1,03 | 1,69 | *E* |

| *Essential AA* | | | *on AA* |
|---|---|---|---|
| *Standard* | *24,87* | *40,90* | *40%* |
| *for Infants*/*children* | *35,26* | *58,00* | *57%* |
| *BCAA* | *9,49* | 15,61 | *15,4%* |

| | | | |
|---|---|---|---|
| *NE=* not *esssential E= essential BCAA=branched-chain amino ocids acids* | | | |

### BEZUGSZEICHENLISTE

- 1: Vorrichtung
- 2: Bunker
- 3: Siebanlage
- 4: Körner
- 5: Schälwalzen
- 6: Schalenarme Kornfraktion
- 7: Flockierwalzen
- 8: Schneckenpresse
- 9: Presskuchen
- 10: Weitere schalenarme Kornfraktion
- 11: Schalenfraktion
- 12: Bandpresse
- 13: Ölklärer
- 14: Expander
- 15: Extrakteur
- 16: Hexanextraktion
- 17: Lösungsmittelaustausch
- 18: Alkoholextraktion
- 19: Trocknung
- 20: Pelletierung
- 21: Destillation
- 22: Destillation
- 23: Destillation
- 24: Trocknung
- 25: Kaltgepresstes Raps-Kernöl
- 26: Öl
- 27: Extraktionsöl
- 28: Molasse
- 29: Gereinigtes Rapsproteinkonzentrat
- 30: Wasserdampf
- 31: Schalenreiche Kornfraktion
- 32: Suspension
- 33: Flotation

## Patentansprüche

1. Verfahren zur Verarbeitung von Körnern (4) einer Rapssaat mit den Schritten:
- Schälen der Körner (4), wozu die Körner (4) durch einen Walzenspalt zwischen Schälwalzen (5) hindurchgeführt werden, und Abtrennen einer schalenarmen Kornfraktion (6) von einer schalenreichen Kornfraktion (31) durch Sieben und/oder Windsichten und
- Abpressen von kaltgepresstem Raps-Kernöl (25) von der schalenarmen Kornfraktion (6) bei Temperaturen unter 65 °C, wobei ein Presskuchen (9) erhalten wird;
**dadurch gekennzeichnet,**
- **dass** die in der schalenarmen Kornfraktion verbleibenden Schalen nicht mehr als 4 Gewichtsprozent ausmachen,
- **dass** die schalenarme Kornfraktion (6) auf einen ersten Restölgehalt von 20 bis 24 Gewichtsprozent ihrer Trockenmasse abgepresst wird,
- **dass** gespannter Wasserdampf (30) zu dem Presskuchen (9) zugeführt und der Presskuchens (9) anschließend zu Collets expandiert wird, wobei der Presskuchen (9) unter Einwirkung des Wasserdampfs (30) vorübergehend auf über 100 °C erwärmt wird,
- **dass** die Collets mit Hexan oder einem anderen organischen Lösungsmittel extrahiert werden, um die Collets auf einen zweiten Restölgehalt von kleiner als 2 Gewichtsprozent ihrer Trockenmasse zu reduzieren, und
- **dass** die mit Hexan oder dem anderen organischen Lösungsmittel extrahierten Collets mit einer wässrigen Alkohollösung extrahiert werden, um ein gereinigtes Rapsproteinkonzentrat (29) zu erhalten, wobei die wässrige Alkohollösung 70 bis 96 Volumenprozent Alkohol aufweist.

2. Verfahren nach Anspruch 1, **dadurch gekennzeichnet, dass** die Körner (4) beim Schälen eine Feuchtigkeit von 3 bis 7 Gewichtsprozent oder von 4 bis 6 Gewichtsprozent ihrer Trockenmasse aufweisen.

3. Verfahren nach Anspruch 1 oder 2, **dadurch gekennzeichnet, dass** die schalenreiche Kornfraktion (31) durch Flotation (33) in Wasser in eine weitere schalenarme Kornfraktion (10) und eine Schalenfraktion (11) aufgetrennt wird, wobei optional die weitere schalenarme Kornfraktion (10) der schalenarmen Kornfraktion (6) vor dem Zuführen des gespannten Wasserdampfs (30) zugeschlagen wird.

4. Verfahren nach einem der vorhergehenden Ansprüche, **dadurch gekennzeichnet, dass** die schalenarme Kornfraktion (6) mit einer Feuchtigkeit von 5 bis 9 Gewichtsprozent oder von 6 bis 8 Gewichtsprozent ihrer Trockenmasse zu Flocken gewalzt wird, die optional eine Flockendicke von 0,1 bis 0,5 mm aufweisen.

5. Verfahren nach einem der vorhergehenden Ansprüche, **dadurch gekennzeichnet, dass** das kaltgepresste Raps-Kernöl (25) in einer ersten Ölfraktion, die während des Abpressens auf nicht mehr als eine Grenztemperatur erwärmt wird, und in einer zweiten Ölfraktion, die während des Abpressens auf mehr als die Grenztemperatur erwärmt wird, aufgefangen wird, wobei die Grenztemperatur zwischen 40 und 50 °C oder zwischen 44 und 46 °C liegt, dass die schalenarme Kornfraktion (6) auf einen ersten Restölgehalt von 18 bis 28 Gewichtsprozent oder von 20 bis 24 Gewichtsprozent ihrer Trockenmasse abgepresst wird und dass der Presskuchen (9) vor dem Zuführen des gespannten Wasserdampfs (30) zerkleinert wird.

6. Verfahren nach einem der vorhergehenden Ansprüche, **dadurch gekennzeichnet, dass** die Collets mit Hexan oder dem anderen organischen Lösungsmittel extrahiert werden, um die Collets auf einen zweiten Restölgehalt von 0,3 bis 1,3 Gewichtsprozent ihrer Trockenmasse zu reduzieren.

7. Verfahren nach einem der vorhergehenden Ansprüche, **dadurch gekennzeichnet, dass** die wässrige Alkohollösung 80 bis 90 Volumenprozent Alkohol aufweist.

8. Verfahren nach einem der vorhergehenden Ansprüche, **dadurch gekennzeichnet, dass** die noch Lösungsmittel-nassen Collets einem Lösungsmitteaustausch (17) unterzogen werden, wobei mindestens ein austauschendes Lösungsmittel verwendet wird, das aus reinem Alkohol und einem Wasser-Alkohol-Azeotrop ausgewählt ist.

9. Verfahren nach einem der vorhergehenden Ansprüche, **dadurch gekennzeichnet, dass** die wässrige Alkohollösung mit mindestens 95-prozentigem Ethanol verdrängt wird.

10. Verfahren nach einem der vorhergehenden Ansprüche, **dadurch gekennzeichnet, dass** das gereinigte Rapsproteinkonzentrat (29) durch Toasten, Flash-Trocknen oder Vakuum-Trocknen getrocknet wird.

11. Vorrichtung zur Durchführung des Verfahrens zur Verarbeitung von Körnern (4) einer Rapssaat nach einem der vorhergehenden Ansprüche mit
- einen Walzenspalt bildenden Schälwalzen (5) zum Schälen der Körner (4);
- einer dem Walzenspalt nachgeschalteten Abtrenneinrichtung mit mindestens einem Sieb oder Windsichter zum Abtrennen einer schalenarmen Kornfraktion (6) von einer schalenreichen Kornfraktion (31);
- Flockierwalzen (7) zum Walzen der schalenarmen Kornfraktion (6) zu Flocken und
- einer Schneckenpresse (8) zum Abpressen von kaltgepresstem Raps-Kernöl (25) von den Flocken, wobei die Schneckenpresse (8) einen Presskuchen (9) ausgibt;
**gekennzeichnet durch**
- einem der Schneckenpresse (8) nachgeschalteten Expander (14) zum Zuführen von gespanntem Wasserdampf (30) zu dem Presskuchen (9) und zum anschließenden Expandieren des Presskuchens (9) zu Collets und
- einen Extrakteur (15), der dazu ausgebildet ist, die Collets mit Hexan oder ein anderen organischen Lösungsmittel zu extrahieren, die noch Lösungsmittel-nassen Collets einem Lösungsmitteaustausch (17) zu unterziehen und die Collets nach dem Lösungsmitteaustausch (17) mit einer wässrigen Alkohollösung zu extrahieren.

12. Vorrichtung nach Anspruch 11, **dadurch gekennzeichnet, dass** ein Flotationsbecken vorgesehen und dazu ausgebildet ist, die schalenreiche Kornfraktion (31) durch Flotation (33) in Wasser in eine weitere schalenarme Kornfraktion (10) und eine Schalenfraktion (11) aufzutrennen, wobei das Flotationsbecken optional einen an oder nahe seinem Grund einmündenden Druckluftanschluss und/oder ein Rührwerk aufweist.

## Claims

1. Method of processing grains (4) of a rape seed comprising the steps:
- unshelling the grains (4) in that the grains (4) are guided through a nip between unshelling rolls (5), and separating a low-shell grain fraction (6) from a high-shell grain fraction (31) by sieving and/or air-separating; and
- pressing cold pressed rape core oil (25) out of the low-shell grain fraction (6) at a temperature below 65° C, wherein an oil cake (9) is obtained;
**characterised in**
- **that** shells remaining in the low-shell grain fraction do not amount to more than 4 percent by weight,
- **that** the low-shell grain fraction (6) is pressed out to a first residual oil content of 20 to 24 percent by weight of its dry matter,
- **that** pressurized steam (30) is supplied to the oil cake (9) and that the oil cake (9) is afterwards expanded into collets, wherein, under the influence of the steam (30), the oil cake (9) is temporarily heated up to above 100° C,
- wherein the collets are extracted by means of hexane or another organic solvent to reduce the collets to a second residual oil content of less than 2 percent by weight of their dry matter, and
- **that** the collets extracted by means of hexane or the other organic solvent are extracted by means of an aqueous alcohol solution to obtain a purified rape protein concentrate (29), wherein the aqueous alcohol solution comprises 70 to 96 percent by volume alcohol.

2. Method of claim 1, **characterised in that**, in unshelling, the grains (4) comprise a moisture content of 3 to 7 percent by weight or of 4 to 6 percent by weight of its dry matter.

3. Method of claims 1 or 2, **characterised in that** the high-shell grain fraction (31) is separated by flotation (33) in water in a further low-shell grain fraction (10) and a shell fraction (11), wherein optionally, the further low-shell grain fraction (10) is added to the low-shell grain fraction (6) prior to supplying the pressurized steam (30).

4. Method of any of the preceding claims, **characterised in that** the low-shell grain fraction (9), at a moisture content of 5 to 9 percent by weight or of 6 to 8 percent by weight of its dry matter, is rolled to flakes which, optionally, have a flake thickness of 0.1 to 0.5 mm.

5. Method of any of the preceding claims, **characterised in that** the cold pressed rape core oil (25) is collected in a first oil fraction which is not heated up to a limit temperature during pressing-out, and in a second oil fraction which is heated up to more than the limit temperature during pressing-out, wherein the limit temperature is between 40 and 50° C or between 44 and 46° C, that the low-shell grain fraction (6) is pressed out to a first residual oil content of 18 to 28 percent by weight or of 20 to 24 percent by weight of its dry matter, and that the oil cake (9) is disintegrated prior to supplying the pressurized steam (30).

6. Method of any of the preceding claims, **characterised in that** the collets are extracted by means of hexane or the other organic solvent to reduce the collets to a second residual oil content of 0.3 to 1.3 percent by weight of their dry matter.

7. Method of any of the preceding claims, **characterised in that** the aqueous alcohol solution comprises alcohol at 80 to 90 percent by volume.

8. Method of any of the preceding claims, **characterised in that** the still solvent-wet collets are subjected to a solvent exchange (17), wherein at least one exchange solvent is used which is selected from pure alcohol and an water-alcohol azeotrope.

9. Method of any of the preceding claims, **characterised in that** the aqueous alcohol solution is replaced by ethanol of at least 95 percent.

10. Method of any of the preceding claims, **characterised in that** the purified rape protein concentrate (29) is dried by toasting, flash drying or vacuum drying.

11. Apparatus for carrying out the method for processing grains (4) of a rape seed according to any of the preceding claims, comprising
- unshelling rolls (5) forming a nip for unshelling the grains (4);
- a separation device arranged downstream of the nip and comprising at least one sieve or air separator for separating a low-shell grain fraction (6) from a high-shell grain fraction (31);
- flaking rolls (7) for rolling the low-shell grain fraction (6) to flakes; and
- a screw press (8) for pressing cold pressed rape core oil (25) out of the flakes, wherein the screw press (8) puts out an oil cake (9);
**characterised by**
- an expander arranged downstream of the screw press (8) for supplying pressurized steam (30) to the oil cake (9) and for afterwards expanding the oil cake (9) into collets; and
- an extractor (15) configured to extract the collets by means of hexane or another organic solvent, to subject the still solvent-wet collets to a solvent exchange (17), and to extract the collets after the solvent-exchange (17) by means of an aqueous alcohol solution.

12. Apparatus of claim 11, **characterised in that** a flotation basin is provided and configured to separate the high-shell grain fraction (31) by flotation (33) in water to a further low-shell grain fraction (10) and a shell fraction (11), wherein the flotation basin, optionally, comprises a pressurized air connector flowing-in at or close to the bottom and/or a stirrer.

## Revendications

1. Procédé pour la transformation de graines (4) de colza, comportant les étapes suivantes :
- décorticage des graines (4), ce pour quoi les graines (4) sont envoyées dans l'espace entre des rouleaux de décorticage (5), et séparation, par tamisage ou vannage, d'une fraction de graines (6) à faible teneur en enveloppes d'une fraction de graines (31) à haute teneur en enveloppes, et
- pressurage de l'huile de colza pressée à froid (25) à partir de la fraction de graines (6) à faible teneur en enveloppes, à des températures inférieures à 65 °C, avec obtention d'un tourteau (9) ;
**caractérisé en ce que**
- les enveloppes restant dans la fraction de graines à faible teneur en enveloppes ne représentent pas plus que 4 pourcents en poids,
- la fraction de graines (6) à faible teneur en enveloppes est pressurée jusqu'à une teneur en huile résiduelles de 20 à 24 pourcents en poids par rapport à sa matière sèche,
- on envoie de la vapeur d'eau saturée (30) au tourteau (9), et le tourteau (9) est ensuite expansé pour donner des collets, le tourteau (9) étant, à cette occasion, chauffé momentanément à plus de 100 °C sous l'action de la vapeur d'eau (30),
- on extrait les collets avec de l'hexane ou un autre solvant organique, pour réduire les collets à une seconde teneur en huile résiduelle, inférieure à 2 pourcents en poids de leur matière sèche, et
- on extrait avec une solution hydro-alcoolique les collets extraits avec de l'hexane ou avec l'autre solvant organique, pour obtenir un concentré purifié (29) de protéines de colza, la solution hydro-alcoolique comprenant 70 à 96 pourcents en volume d'alcool.

2. Procédé selon la revendication 1, **caractérisé en ce que** les graines (4), lors du décorticage, présentent une humidité de 3 à 7 pourcents en poids ou de 4 à 6 pourcents en poids de leur matière sèche.

3. Procédé selon la revendication 1 ou 2, **caractérisé en ce que** la fraction de graines (31) à haute teneur en enveloppes est séparée par flottation (33), dans de l'eau, en une autre fraction de graines (10) à faible teneur en enveloppes et en une fraction d'enveloppes (11), en option l'autre fraction de graines (10) à faible teneur en enveloppes étant ajoutée à la fraction de graines (6) à faible teneur en enveloppes avant l'amenée de la vapeur d'eau saturée (30).

4. Procédé selon l'une des revendications précédentes, **caractérisé en ce que** la fraction de graines (6) à faible teneur en enveloppes, ayant une humidité de 5 à 9 pourcents en poids ou de 6 à 8 pourcents en poids de sa matière sèche, est passée aux rouleaux pour donner des flocons, qui en option présentent une épaisseur de flocon de 0,1 à 0,5 mm.

5. Procédé selon l'une des revendications précédentes, **caractérisé en ce que** l'huile de colza (25) pressée à froid est reprise dans une première fraction d'huile, qui pendant le pressurage est chauffée à une température non supérieure à une température limite, et dans une seconde fraction d'huile, qui pendant le pressurage est chauffée à une température supérieure à la température limite, la température limite étant comprise entre 40 et 50 °C ou entre 44 et 46 °C ; que la fraction de graines (6) à faible teneur en enveloppes est pressurée jusqu'à une teneur en huile résiduelle de 18 à 28 pourcents en poids ou de 20 à 24 pourcents en poids de sa matière sèche ; et que le tourteau (9) est broyé avant amenée de la vapeur d'eau saturée (30).

6. Procédé selon l'une des revendications précédentes, **caractérisé en ce que** les collets sont extraits avec de l'hexane ou avec l'autre solvant organique, pour réduire les collets à une seconde teneur en huile résiduelle de 0,3 à 1,3 pourcents en poids de leur matière sèche.

7. Procédé selon l'une des revendications précédentes, **caractérisé en ce que** la solution hydro-alcoolique présente une teneur en alcool de 80 à 90 pourcents en volume.

8. Procédé selon l'une des revendications précédentes, **caractérisé en ce que** les collets, encore humides de solvant, sont soumis à un échange de solvants (17), ce à l'occasion de quoi on utilise au moins un solvant à échanger, qui est choisi parmi l'alcool pur et un azéotrope eau-alcool.

9. Procédé selon l'une des revendications précédentes, **caractérisé en ce que** la solution hydro-alcoolique est remplacée par de l'éthanol à au moins 95 pourcents.

10. Procédé selon l'une des revendications précédentes, **caractérisé en ce que** le concentré purifié (29) de protéines de colza est séché par grillage, séchage éclair ou séchage sous vide.

11. Dispositif pour la mise en œuvre du procédé pour le traitement de graines de colza selon l'une des revendications précédentes, comportant :
- un rouleau de décorticage (5), formant un espace entre rouleaux, pour le décorticage des graines (4),
- un dispositif de séparation, monté en aval de l'espace entre les rouleaux, comportant au moins un tamis ou un système de vannage, pour séparer une fraction de graines (6) à faible teneur en enveloppes d'une fraction de graines (31) à haute teneur en enveloppes,
- des rouleaux de floconnage (7), pour passer aux rouleaux la fraction de graines (6) à faible teneur en enveloppes, pour obtenir des flocons, et
- une extrudeuse (8), pour pressurer l'huile de colza (25) pressée à froid et la séparer des flocons, l'extrudeuse (8) donnant un tourteau (9) ;
**caractérisé par**
- un expandeur (14) monté en aval de l'extrudeuse (8), pour amener de la vapeur d'eau saturée (30) au tourteau (3) et pour l'expansion subséquente du tourteau (9), pour obtenir des collets, et
- un extracteur (15), agencé pour extraire les collets avec de l'hexane ou un autre solvant organique, soumettre les collets encore humides de solvant à un échange de solvants (17), et extraire les collets, après l'échange de solvants (17), avec une solution hydro-alcoolique.

12. Dispositif selon la revendication 11, **caractérisé en ce qu'**un bassin de flottation est prévu et conçu de façon à séparer la fraction de graines (31) à haute teneur en enveloppes, par flottation (33) dans de l'eau, en une autre fraction de graines (10) à faible teneur en enveloppes et en une fraction d'enveloppes (11), le bassin de flottation comportant en option une ou plusieurs prises d'air comprimé débouchant au niveau ou près de son fond, et/ou un agitateur.
